(19) Europäisches Patentamt / European Patent Office / Office européen des brevets

(11) **EP 2 648 338 B1**

(12) **EUROPEAN PATENT SPECIFICATION**

(45) Date of publication and mention
of the grant of the patent:
**01.09.2021 Bulletin 2021/35**

(51) Int Cl.:
*H04B 1/16* (2006.01)   *H04R 5/04* (2006.01)

(21) Application number: **12162829.1**

(22) Date of filing: **02.04.2012**

(54) **Automatic Mono/Stereo Switch**

Automatischer Mono-/Stereoschalter

Commutation automatique mono/stéréo

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

• **Schweikhardt, Markus**
**76597 Loffenau (DE)**
• **Zeller, Michael**
**76307 Karlsbad (DE)**

(43) Date of publication of application:
**09.10.2013 Bulletin 2013/41**

(73) Proprietor: **Harman Becker Automotive Systems
GmbH
76307 Karlsbad (DE)**

(72) Inventors:
• **Doerbecker, Matthias**
**76275 Ettlingen (DE)**

(74) Representative: **Westphal, Mussgnug
Patentanwälte & Partner mbB
Werinherstraße 79
81541 München (DE)**

(56) References cited:
**US-A- 3 634 626    US-A- 5 515 442**

## Description

Technical Field

The present invention relates to the field of hifi audio devices, in particular to stereophonic audio amplifiers which serve to couple external stereophonic or monophonic audio signal sources.

Background

Modern audio devices such as hifi amplifiers in home audio systems or automotive infotainment systems allow for the connection of external consumer electronic devices (CE devices) as audio signal sources. For this purpose the audio system or e.g. the head unit of an automotive infotainment system may provide chinch connectors (e.g. female RCA jacks) so as to permit plugging in the external audio source. Usually the amplifiers are stereophonic amplifiers for reproducing a stereo audio signal. An external audio source is then usually connected using two chinch connectors, one for the left channel and one for the right channel.

A monophonic audio source provides only a single (monophonic) audio signal which has to be coupled to the right or the left audio channel (using either the connector for the left or the connector for the right channel). Consequently the audio signal is only reproduced via the left or the right loudspeakers, which is an undesired result. So-called Y-cables are available which receive the monophonic audio signal and distribute it to both, left and right, stereo channels. Alternatively, a mechanical switch may be used to couple a monophonic audio signal to both stereo channels. One exemplary stereo/mono switching circuit is described in the publication US 5,515442. The publication US 3,634,626 relates to stereo-to-mono switching. However, current solutions still have some drawbacks, particularly when the monophonic signals source is connected to the "wrong" stereo channel or when the consumer forgets to switch back to stereo when later connecting a stereo signal source.

Thus, there is a need for an improved, "intelligent" mono/stereo switch for coupling monophonic and stereophonic audio signal sources to stereophonic audio amplifiers for audio signal reproduction.

Summary of the Invention

The invention is defined in the appended claims.

Embodiments which do not fall within the scope of the claims are not part of the invention but rather background art useful for understanding the invention.

Brief description of the Drawings

The invention can be better understood with reference to the following drawings and description. The components in the figures are not necessarily to scale, instead emphasis is placed upon illustrating the principles of the invention. Moreover, in the figures, like reference numerals designate corresponding parts. In the drawings:

FIG. 1     illustrates a monophonic audio signal source coupled to the left channel of a stereophonic audio amplifier;

FIG. 2     illustrates a monophonic audio signal source coupled to a stereophonic audio amplifier by a Y-cable;

FIG. 3     illustrates a monophonic audio signal source coupled to a stereophonic audio amplifier via a switch;

FIG. 4     illustrates a monophonic audio signal source coupled to a stereophonic audio amplifier via a universal stereo/mono switch;

FIG. 5     illustrates a monophonic audio signal source coupled to a stereophonic audio amplifier via an "smart" semiautomatic stereo/mono switch;

FIG. 6     illustrates a monophonic audio signal source coupled to a stereophonic audio amplifier via a "smart" fully automatic stereo/mono switch; and

FIG. 7     is a block diagram illustrating one exemplary implementation of the function of the signal analysis performed by the automatic stereo/mono switch of FIG. 6.

Detailed Description

The invention is described below by means of an exemplary stereophonic audio amplifier, wherein circuit components (pre-amplifiers, filters, etc.) have been omitted for the ease of illustration. The various aspects of the present invention described herein may be readily applied to any audio device in which stereophonic and monophonic audio signal sources may be alternatively coupled to a stereo input audio channel of an arbitrary audio system such as a home audio system, an A/V receiver, an automotive multimedia system, etc. Further, only two loudspeakers are connected to the described amplifier. However, the present invention may readily be applied to audio systems having multiple audio output channels and a respective number of loudspeakers.

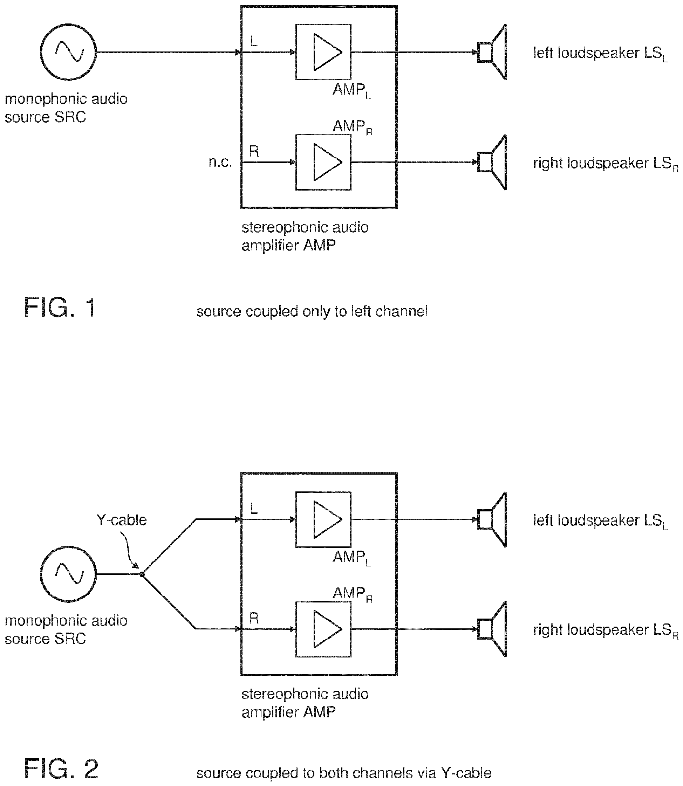

FIG. 1 illustrates a "quick and dirty" solution of a stereophonic audio amplifier AMP which has two input audio channels (a left and a right channel) which may be supplied with the left and right components of a stereophonic audio signal. When a stereo input signal is supplied to the amplifier AMP the left signal component is amplified using the power amplifier stage $AMP_L$ and the right signal component is amplified using the power amplifier stage AMP$_R$. The resulting acoustic signal is reproduced by the loudspeakers LS$_L$ and LS$_R$. In the depicted example, however, a monophonic signal source SRC is coupled to one of the amplifier inputs, i.e. to the input L of the left audio channel. The input R of the right channel remains unconnected (n.c., short for: not connected). It is apparent from the figure that only the loudspeaker(s) LS$_L$ coupled to the left channel will reproduce the input signal, whereas the loudspeaker(s) coupled to the right channel remain silent. This situation is understandably rather inconvenient for the listeners/users of the audio system.

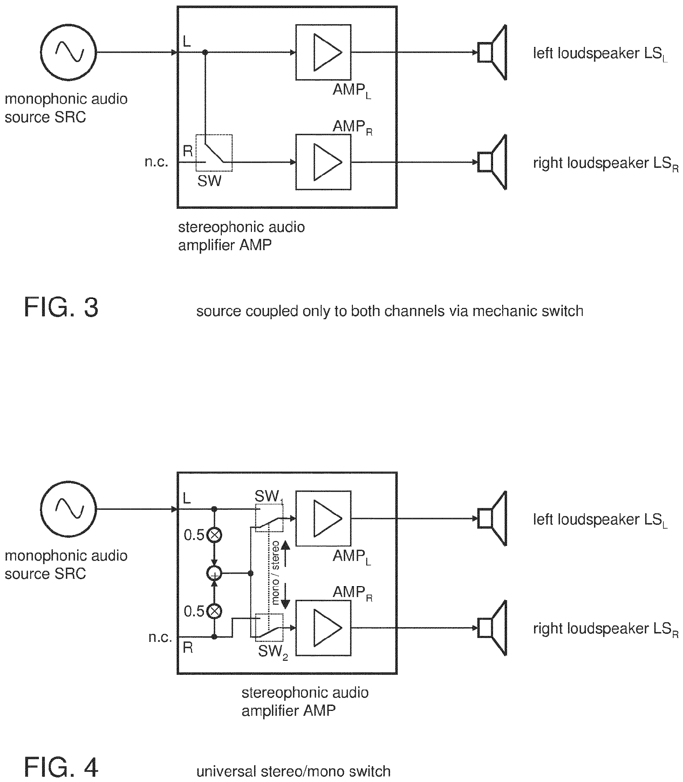

FIG. 2 illustrates an improved solution in which the monophonic signal source SRC is coupled to the left and the right input channels L and R of the stereophonic amplifier AMP using a Y-cable which distributes the monophonic signal to both input channels L and R and thus the same monophonic signal is reproduced by the loudspeakers coupled to the left and right channels. This situation provides a much better signal reproduction as all loudspeakers are used. It requires the user/listener to use special equipment (the Y-cable) to accomplish the desired result. The example of FIG. 3 illustrates a stereophonic amplifier AMP including a switch SW (usually but not necessarily a mechanical switch) which is configured to couple, in a first switch position ("mono position"), the monophonic signal source SRC, which is coupled to the input associated with the left signal, to both amplifier stages AMP$_L$, AMP$_R$ so as to distribute the monophonic input signal to both channels like the Y-cable in the previous example. In the second switch position ("stereo position"), the input signal connected to the left channel L is directly supplied only to the amplifier stage AMP$_L$ whereas the input signal connected to the right channel R is directly supplied only to the amplifier stage AMP$_R$ and no signal distribution is performed. In the example of FIG. 3, a monophonic signal source must always be connected to the input of the left channel. If the monophonic signal is accidentally coupled to the right channel, the loudspeakers will remain silent when the switch SW is in the mono position. Further, the input impedance for the monophonic input source SRC may be reduced by a factor of two in the examples of FIGs. 2 and 3. However, this depends on the actual implementation.

FIG. 4 illustrates a universal stereo/mono switch used in a stereophonic amplifier AMP. The stereo/mono switch includes two switches SW$_1$, SW$_2$ which can only be switched synchronously (i.e. either both switches are in a "stereo position" or in a "mono position"). When the switches are set to their stereo position (i.e. the "upper" switch position in Fig. 4), the inputs of the left and right channels L, R are directed to the amplifier stages AMP$_L$, AMP$_R$, respectively. When the switches are set to their mono position (i.e. the "lower" switch position in Fig. 4), both power amplifier stages AMP$_L$, AMP$_R$ are supplied with the average of the two signals supplied to the inputs of the left and right channels L, R. In the depicted example the averaging is accomplished by the two attenuator elements labeled 0.5 and the adder which provides the sum of the two input signals multiplied by 0.5. If a stereophonic input signal is applied the present stereo/mono switch may "reduce" the signal to mono. However, if only a monophonic signal is applied to any of the two input channels (whereas the other channel remains unconnected as illustrated in FIG. 4), the monophonic input signal is attenuated by 6 dB before arriving at the two power amplifier stages AMP$_L$, AMP$_R$, which is still an undesired situation.

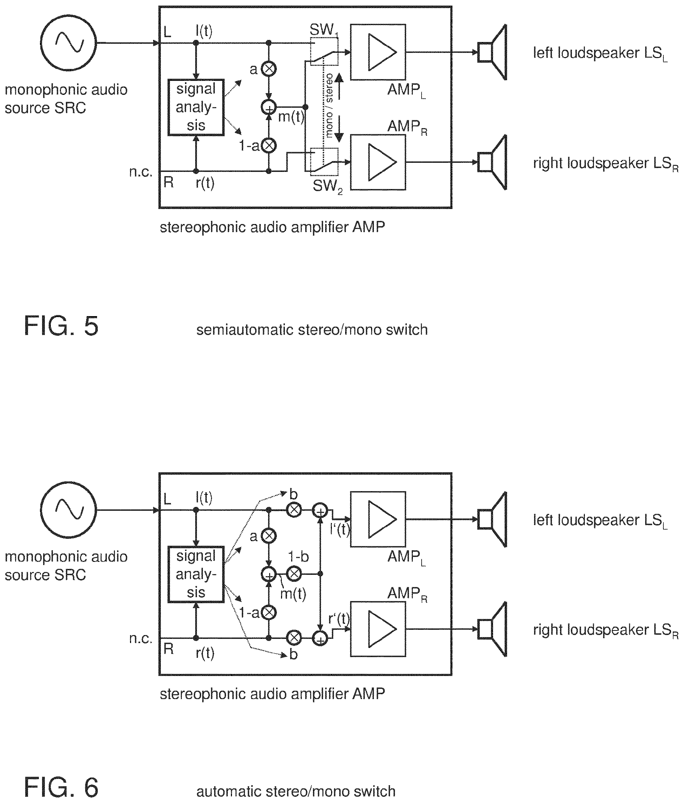

FIG. 5 illustrates a stereo/mono switch to be used together with the stereophonic amplifier AMP. The stereo/mono switch is essentially the same as the switch shown in FIG. 4. That is, the stereo/mono switch includes two switches SW$_1$, SW$_2$ which can be only switched synchronously, (either both to a "stereo position" or to a "mono position"). When the switches are set to their stereo position the inputs of the left and right channels L, R are directed to the amplifier stages AMP$_L$, AMP$_R$, respectively, as in the previous example. When the switches are set to their mono position both power amplifier stages AMP$_L$, AMP$_R$ are supplied with the same weighted average of the two signals supplied to the inputs of the left and right channels L, R. In contrast to the example of FIG. 4 in which the weighing factors for the left and right channels are identically 0.5, the weighing factors are adjustable in the present example. Generally, the weighing factor applied to the signal of the left channel is denoted as "a" whereas the weighing factor applied to the signal of the right channel is denoted as "1-a". The sum signal is fed to both power amplifier stages AMP$_L$, AMP$_R$. The variable a is adjusted using a signal analyzing unit (labeled "signal analysis" in the figures) which is configured to compare the signals supplied to the left and the right channels and to determine whether a stereophonic signal is supplied to the inputs L, R or a monophonic signal is supplied to only one of the inputs L, R.

For example, the signal analyzing unit may be configured to calculate the signal level (short-term power or short-term magnitude) of the signals supplied to the left and right inputs. Assuming S$_L$ is the short-term magnitude of the signal supplied to the left channel L and S$_R$ is the short-term magnitude of the signal supplied to the right channel R, the signal analyzing unit may calculate the ratio S$_L$/S$_R$ of the two values or the difference S$_L$-S$_R$. The ratio S$_L$/S$_R$ or the difference S$_L$-S$_R$ may be used to decide whether a stereophonic signal is supplied to the inputs L, R (in this case the ratio would be approximately 1 and the difference approximately 0) or a monophonic signal is supplied to the left channel input L (in this case the ratio would be very high and the difference would be positive) or to the right channel input R (in this case the ratio would be approximately 0 and the difference would be negative). If a monophonic signal is detected in the left channel, the variable factor a is set to 1; if a monophonic signal is detected in the right channel, the variable factor a is set to 0 (thus 1-a=1).

While the example of FIG. 5 may be regarded as a semi-automatic mono/stereo switch, an example of a fully automatic mono/stereo switch is illustrated in FIG. 6. The example of FIG. 5 includes a signal analyzing unit (labeled "signal analysis" in FIG. 6) which is configured to essentially perform the same analysis as described above with reference to FIG. 5. However, the switches SW$_1$ and SW$_2$ used in the previous examples are replaced by the multipliers which apply the weighting factors $b$ and $1-b$ as illustrated in FIG. 5. A weighting factor b equaling 1 (and thus 1-b equaling 0) corresponds to the "stereo position" of the switches SW$_1$ and SW$_2$ in the previous examples, whereas a weighting factor $b$ equaling 0 (and thus 1-$b$ equaling 1) corresponds to the "mono position" of the switches SW$_1$ and SW$_2$. When the signal analyzing unit detects a stereophonic signal being supplied to the left and right channels (ratio S$_L$/S$_R$ being approximately 1 or difference S$_L$-S$_R$ being approximately zero) the value of the weighting factor $b$ may be set to 1, whereas the value of the weighting factor $b$ may be set to 0 (thus 1-$b$ equals 1) when a monophonic signal is detected in one of the two channels R or L.

Assuming the signal supplied to the left channel is l(t) and the signal supplied to the right channel is r(t), whereby one of the two signals is constantly zero in case of a monophonic signal, the automatic stereo/mono switch provides the signal

$$l'(t) = b \cdot l(t) + (1-b) \cdot m(t)$$

to the left power amplifier stage and the signal

$$r'(t) = b \cdot r(t) + (1-b) \cdot m(t)$$

to the right power amplifier stage and the signals wherein m(t) is the weighted sum of l(t) and r(t), that is

$$m(t) = a \cdot l(t) + (1-a) \cdot r(t).$$

In case a stereophonic signal is applied to the left and right channels the signal analyzing unit sets $b$=1 as explained above. Provided $b$=1, it follows from the equations above that l'(t)=l(t) and r'(t)=r(t), whereas the value of m(t) is irrelevant as it is weighted by the factor 1-b which is zero in this case. In case a monophonic signals is supplied to the left channel (as illustrated in FIG. 6) the signal analyzing unit sets b=0 and a=1 as explained above. The signal r(t) is zero in this case. Provided b=0, a=1, and r(t)=0, it follows from the equations above that m(t)=l(t), and l'(t)=l(t) and also r'(t)=l(t). In case a monophonic signals is supplied to the right channel the signal analyzing unit sets $b$=0 and a=0 as explained above. The signal l(t) is zero in this case. Provided b=0, a=0, and l(t)=0, it follows from the equations above that m(t)=r(t), and l'(t)=r(t) and also r'(t)=r(t). By analyzing the signals supplied to the left and right channel, the stereo/mono switch may be operated fully automatically.

As mentioned above, the signal (power) levels (short-term power or short-term magnitude) of the signals r(t), l(t) supplied to the left and right input, respectively, may be used to determine whether the two stereo channels are supplied with a stereophonic audio signal or whether one of the channels is supplied with a monophonic audio signal. As an alternative, the cross correlation between the left and the right channel signals may be used to determine which channel contains the monophonic input signal. In this case the weighing factor $b$ may be set to 1 if the cross-correlation between the two audio channels exceeds a given threshold value. In the case that only a monophonic signal is supplied to one channel the cross-correlation would be almost zero. The signal (power) level(s) of the input signals r(t) l(t) may then be used to determine which channel the monophonic signal is applied to.

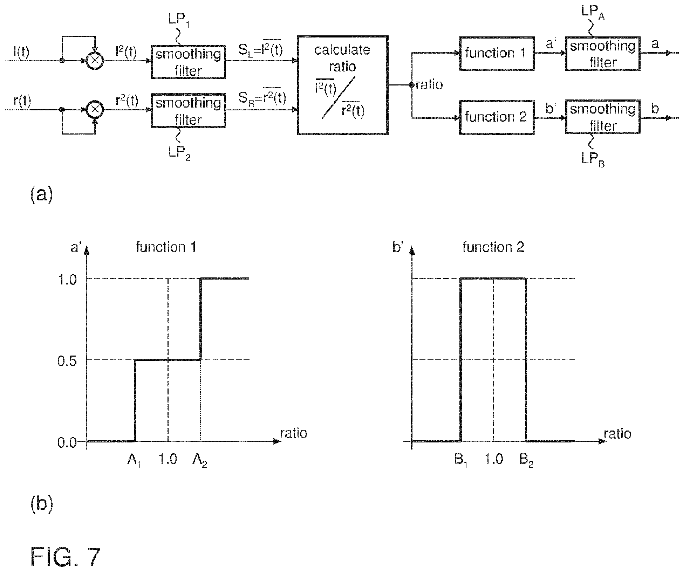

It should be noted that in the examples of FIG. 5 and 6, a weighting factor of 1 may be implemented by a closed electronic switch, whereas a weighting factor of 0 may be implemented by an open electronic switch (e.g. a transistor). In a software implementation (e.g. using a digital signal processor or a micro controller) weighting factors of 1 and 0 may be discriminated by using if-then-else program code elements or an equivalent program code. However, it might be advantageous to use weighting factors that can represent any intermediate value between 0 and 1 instead of using electronic switches or binary weighting factors, which are either 0 or 1. For example, time-variant weighing factors may be applied in order to avoid clicking noise artifacts that might result from the "hard" switching between the different signals. That is, a transition between the weighting a and b from 0 to 1 (or vice versa) may be smoothed as explained with reference to FIG. 7.

FIG. 7 is a block diagram illustrating one exemplary implementation of the function performed by the signal analyzing unit of automatic stereo/mono switch of FIG. 6. A simplified version may be applicable for the example of FIG. 5. As can be seen from the examples of FIGs. 5 and 6, the signal analyzing unit is configured to calculate appropriate values for the weighting factors a and b or for the weighting factor a only in the case shown in FIG. 5. The block diagram of FIG. 7a illustrates an exemplary implementation of the function performed by the signal analyzing unit. The signals l(t) and r(t) supplied as inputs to the left and right audio channels are also input signals for the signal analyzing unit (labeled "signal analysis" in FIGs. 5 and 6. The (e.g. time-variant) weighting factors a and (optionally) b may be seen as output signals of the signal analyzing unit. As already mentioned above, the short-term signal levels or the short-term signal power levels S$_L$ and S$_R$ are considered. In the implementation shown in FIG. 7a the signal power levels are calculated. That is, the input signals l(t) and r(t) are squared and the squared signals l$^2$(t) and r$^2$(t)

are (low-pass) filtered using appropriate smoothing filters $LP_L$, $LP_R$. These smoothing filters may be a moving-average filter, a low-pass filter or any other filter providing a smoothing function so that the output signal is the (e.g. weighted) average of the input signal throughout a defined time span. The smoothed signals can be regarded as short-term power levels $S_L$ and $S_R$ of the input signals l(t) and r(t), respectively.

In order to decide how to set the weighting factors *a* and *b* the ratio $S_L/S_R$ may be considered, as already mentioned above with respect to the FIGs. 5 and 6. In accordance to the exemplary implementation of FIG. 7a, the ratio $S_L/S_R$ is calculated and a first and a second characteristic function (labeled "function 1" and "function 2" in FIG. 7) may be applied to the calculated ratio to obtain values *a'* and *b'* which might be directly used as weighting factors *a* and *b*, respectively. However, the values *a'* and *b'* may be subject to smoothing using further smoothing filters $LP_A$, $LP_B$ in order to avoid clicking noise artifacts that might result from the "hard" switching between the different discrete values of the weighting factors *a'* and *b'*. A moving average filter or other suitable low-pass filters may be used as smoothing filters fur this purpose. The outputs of the smoothing filters finally represents the weighing factors *a* and *b*.

FIG. 7b illustrates examples of the first and a second characteristic function mentioned above. The left diagram of FIG. 7b illustrates the relation between the (unsmoothed) weighting factor a' and the ratio $S_L/S_R$. When the ratio is included in an interval around the value 1.0 then a stereophonic signal is present at the input channels L, R (see FIG. 5 or 6). This situation can be detected when the ratio is greater than a lower threshold $A_1$ and lower than an upper threshold $A_2$, wherein $A_1 < 1.0$ and $A_2 > 1.0$. In the example of FIG. 5 the weighting factor *a'* is set to 0.5 when $A_1 < S_L/S_R < A_2$. In the example of FIG. 6 the value of the weighting factor is irrelevant when stereophonic signals are to be reproduced. Generally, when the ratio $S_L/S_R$ is lower than the lower threshold $A_1$ it can be concluded that a monophonic signal is present at the right channel input R and thus the weighing factor *a'* is set to 0. Conversely, when the ratio $S_L/S_R$ is greater than the upper threshold $A_2$ it can be concluded that a monophonic signal is present at the left channel input L and thus the weighting factor *a'* is set to 1.

The right diagram of FIG. 7b illustrates the relation between the (unsmoothed) weighting factor b' and the ratio $S_L/S_R$. When the ratio is included in an interval around the value 1.0 then a stereophonic signal is present at the input channels L, R (see FIG. 5 or 6). This situation can be detected when the ratio is greater than a lower threshold $B_1$ and lower than an upper threshold $B_2$ wherein $B_1 < 1.0$ and $B_2 > 1.0$. The weighing factor *b'* is set to 1 when $B_1 < S_L/S_R < B_2$ and to 0 otherwise. The thresholds $A_1$ and $B_1$ and, respectively, $A_2$ and $B_2$ may be equal. Instead of the ratio between the signal (power) levels, the difference between the levels may be considered. The thresholds have to be adapted appropriately.

Although various exemplary embodiments of the invention have been disclosed, it will be apparent to those skilled in the art that various changes and modifications can be made which will achieve some of the advantages of the invention without departing from the scope of the invention. The scope of protection of the invention is defined in the appended claims.

## Claims

1. An audio device (fig. 5) that includes:

    a first and a second input (R, L) for receiving, respectively, a left and a right component of a stereophonic audio signal or for receiving a monophonic audio signal at one of the first or second input;
    a first and a second amplifier stage ($AMP_L$, $AMP_R$);
    a stereo/mono switch (SW1, SW2) which is configured to direct either the left and the right component of a stereophonic audio signal received at the first and second input (L, R) to the first and the second amplifier stage ($AMP_L$, $AMP_R$), respectively, or a monophonic signal received at one of the first and second input to both of the first and the second amplifier stage ($AMP_L$, $AMP_R$); and
    a signal analyzing unit (fig. 5, signal analysis) coupled to the first and second input (R, L) and configured to automatically detect whether a monophonic signal is present at the first input or the second input and to provide a respective control signal to the stereo/mono switch indicative of which of the first and second input (R, L) the monophonic signal has been detected at, **characterized in that** the stereo/mono switch is configured to provide a mono signal to the first and he second amplifier stage ($AMP_L$, $AMP_R$), the mono signal being a weighted sum of the signals received at the first and second input (R, L), the weighted sum being calculated using weighting factors (a, b) applied to the signals received at the first and second input (R, L).

2. The audio device of claim 1 wherein the weighting factor for the signal received at the first input is set to 1 and the weighting factor for the signal received at the second input is set to 0, or vice versa, dependent on which input a monophonic signal is detected by the signal analyzing unit.

3. The audio device of claim 1 or 2 further comprising switches configured to either direct the weighted sum signal to both amplifier stages ($AMP_L$, $AMP_R$) or, alternatively, to direct the signals received at the first and second input to the respective amplifier stage(AMP$_L$, AMP$_R$).

4. The audio device of claims 1, 2 or 3, in which the weighting factors are set to 0.5 when a stereophonic signal is detected by the signal analyzing unit.

5. The audio device of one of the claims 1 to 4 in which the stereo/mono switch is configured to provide the signal b·l(t)+(1-b) ·m(t) to the first amplifier stage (AMP$_L$) and the signal b·r(t)+(1-b)·m(t) to the second amplifier stage (AMP$_R$),

   wherein l(t) is the signal received at the first input, r(t) is the signal received at the second input, a and b are weighting factors, and m(t) is a weighted sum of l(t) and r(t) equaling a·l(t)+(1-a) ·r(t),
   wherein the signal analyzing unit is configured to set the weighting factor b to 1 if a stereophonic signal is detected at the first and second input and to 0 if a monophonic signal is detected at one of the first and second input, (R, L) and
   wherein the signal analyzing unit is configured to set the weighting factor a to 1 if a monophonic signal is detected at the first input (L) and to 0 if a monophonic signal is detected at the second input (R).

6. The audio device of one of the preceding claims wherein the signal analyzing unit is configured to

   calculate the short-term signal level or the short-time power level of signals received at the first and second inputs thus obtaining first and second signal levels,
   calculate a ratio or a difference between the calculated levels, and determine at least one weighting factor to be applied to the signals received at the first and second inputs dependent on a comparison between the calculated ratio or difference and at lease two thresholds, the result of the comparison being indicative of whether a stereophonic or a monophonic signal is present at the first and second inputs and, if a monophonic signal is present, which one of the first and second input receives the monophonic signal

7. The audio device of claim 6 wherein the signal analyzing unit is further configured to smooth the calculated weighting factor(s) using smoothing filters.

8. The audio device of claim 6, wherein two weighting factors are used to calculate a weighted average of the signals received at the first and second inputs, thus providing an intermediate signal,

9. The audio device of claim 8, wherein two further weighting factors are used to provide a left signal and a right signal to be supplied to the first and the second amplifier stage (AMP$_L$, AMP$_R$), respectively;

   the left signal being a weighted average of the intermediate signal and the signal received at the first input (L), and
   the right signal being a weighted average of the intermediate signal and the signal received at the second input (R).

10. The audio device of claim 8, wherein the a stereo/mono switch includes an electronic or a mechanical switch configured to forward either the intermediate signal to both, the first and the second amplifier stage (AMP$_L$, AMP$_R$), or the signals received at the first and second inputs (R, L) to the first and the second amplifier stage (AMP$_L$, AMP$_R$), respectively.

11. The audio device of one of the claims 1 to 10 in which the signal analyzing unit is further configured to detect whether either a stereophonic signal is present at the first and second input or a monophonic signal is present at the first or second input and to provide a respective control signal to the stereo/mono switch indicative of whether a stereophonic or a monophonic signal has been detected and, if a monophonic signal has been detected, to detect which of the first and second input the monophonic signal has been detected at.

12. The audio device of one of the claims 1 to 11 in which the signal analyzing unit is configured to calculate the short-term signal level or the short-time power level of signals received at the first and second inputs thus obtaining first and second signal levels, the signal levels being indicative of whether a stereophonic signal is present at the inputs or a monophonic signal is present at one of the inputs and, if a monophonic signal is present, the signal levels being indicative of which input the monophonic signal is supplied to.

13. The audio device of one of the claims 1 to 12, in which the signal analyzing unit is configured to calculate the short-term signal or power level of signals received at the first and second inputs, thus obtaining first and second signal levels and is further configured to calculate the ratio of the signal levels.

**Patentansprüche**

1. Audiovorrichtung (Fig. 5), die Folgendes beinhaltet:

   einen ersten und einen zweiten Eingang (R, L) zum Empfangen von jeweils einer linken und einer rechten Komponente eines stereophonen Audiosignals oder zum Empfangen eines monophonen Audiosignals an einem von dem ersten oder dem zweiten Eingang;

eine erste und eine zweite Verstärkerstufe (AMP$_L$, AMP$_R$) ;

einen Stereo-/Monoschalter (SW1, SW2), der konfiguriert ist, um entweder die linke oder die rechte Komponente eines stereophonen Audiosignals, das an dem ersten und dem zweiten Eingang (L, R) empfangen wird, jeweils zu der ersten und der zweiten Verstärkerstufe (AMP$_L$, AMP$_R$) zu leiten, oder eines monophonen Signals, das an einem von dem ersten und dem zweiten Eingang empfangen wird, zu beiden von der ersten und der zweiten Verstärkerstufe (AMP$_L$, AMP$_R$); und

eine Signalanalysiereinheit (Fig. 5, Signalanalyse), die an den ersten und den zweiten Eingang (R, L) gekoppelt und konfiguriert ist, um automatisch zu erfassen, ob ein monophones Signal an dem ersten Eingang oder dem zweiten Eingang vorhanden ist und um ein jeweiliges Steuersignal an den Stereo-/Monoschalter bereitzustellen, das angibt, an welchem von dem ersten und dem zweiten Eingang (R, L) das monophone Signal erfasst worden ist,

**dadurch gekennzeichnet, dass**

der Stereo-/Monoschalter konfiguriert ist, um der ersten und der zweiten Verstärkerstufe (AMP$_L$, AMP$_R$) ein Monosignal bereitzustellen, wobei das Monosignal eine gewichtete Summe der Signale ist, die an dem ersten und dem zweiten Eingang (R, L) empfangen werden, wobei die gewichtete Summe unter Verwendung von Gewichtungsfaktoren (a, b) berechnet wird, die auf die Signale angewandt werden, die an dem ersten und dem zweiten Eingang (R, L) empfangen werden.

2. Audiovorrichtung nach Anspruch 1, wobei der Gewichtungsfaktor für das Signal, das an dem ersten Eingang empfangen wird, auf 1 festgelegt ist, und der Gewichtungsfaktor für das Signal, das an dem zweiten Eingang empfangen wird, auf 0 festgelegt ist, oder umgekehrt, abhängig davon, an welchem Eingang ein monophones Signal durch die Signalanalysiereinheit erfasst wird.

3. Audiovorrichtung nach Anspruch 1 oder 2, ferner umfassend Schalter, die konfiguriert sind, um entweder das gewichtete Summensignal zu beiden Verstärkerstufen (AMP$_L$, AMP$_R$) zu leiten, oder alternativ, um die Signale, die an dem ersten und dem zweiten Eingang empfangen werden, an die jeweilige Verstärkerstufe (AMP$_L$, AMP$_R$) zu leiten.

4. Audiovorrichtung nach Anspruch 1, 2 oder 3, wobei die Gewichtungsfaktoren auf 0,5 festgelegt sind, wenn ein stereophones Signal durch die Signalanalysiereinheit erfasst wird.

5. Audiovorrichtung nach einem der Ansprüche 1 bis 4, wobei der Stereo-/Monoschalter konfiguriert ist, um das Signal b l(t)+(1-b) m(t) der ersten Verstärkerstufe (AMP$_L$) bereitzustellen und das Signal b r(t)+(1-b) m(t) der zweiten Verstärkerstufe (AMP$_R$) bereitzustellen,

wobei l(t) das Signal ist, das an dem ersten Eingang empfangen wird, r(t) das Signal ist, das an dem zweiten Eingang empfangen wird, a und b Gewichtungsfaktoren sind, und m(t) eine gewichtete Summe von l(t) und r(t) gleich a l(t)+(1-a) r(t) ist,

wobei die Signalanalysiereinheit konfiguriert ist, um den Gewichtungsfaktor b auf 1 festzulegen, wenn ein stereophones Signal an dem ersten und dem zweiten Eingang erfasst wird, und auf 0, wenn ein monophones Signal an einem von dem ersten und dem zweiten Eingang (R, L) erfasst wird, und

wobei die Signalanalysiereinheit konfiguriert ist, um den Gewichtungsfaktor a auf 1 festzulegen, wenn ein monophones Signal an dem ersten Eingang (L) erfasst wird, und auf 0, wenn ein monophones Signal an dem zweiten Eingang (R) erfasst wird.

6. Audiovorrichtung nach einem der vorhergehenden Ansprüche, wobei die Signalanalysiereinheit konfiguriert ist, um

den kurzfristigen Signalpegel oder den kurzfristigen Leistungspegel von Signalen zu berechnen, die an dem ersten und dem zweiten Eingang empfangen werden, wodurch erste und zweite Signalpegel erhalten werden,

ein Verhältnis oder eine Differenz zwischen den berechneten Pegeln zu berechnen, und

zumindest einen Gewichtungsfaktor zu bestimmen, der auf die Signale anzuwenden ist, die an dem ersten und dem zweiten Eingang empfangen werden, abhängig von einem Vergleich zwischen dem berechneten Verhältnis oder der berechneten Differenz und zumindest zwei Schwellenwerten, wobei das Ergebnis des Vergleichs angibt, ob ein stereophones oder ein monophones Signal an dem ersten und dem zweiten Eingang vorhanden ist, und, wenn ein monophones Signal vorhanden ist, welcher von dem ersten und dem zweiten Eingang das monophone Signal empfängt.

7. Audiovorrichtung nach Anspruch 6, wobei die Signalanalysiereinheit ferner konfiguriert ist, um den/die berechnete(n) Gewichtungsfaktor(en) unter Verwendung von Glättungsfiltern zu glätten.

8. Audiovorrichtung nach Anspruch 6, wobei zwei Gewichtungsfaktoren verwendet werden, um einen gewichteten Durchschnitt der Signale zu berechnen, die an dem ersten und dem zweiten Eingang empfangen werden, wodurch ein Zwischensignal bereitgestellt wird.

**9.** Audiovorrichtung nach Anspruch 8, wobei zwei weitere Gewichtungsfaktoren verwendet werden, um ein linkes Signal und ein rechtes Signal bereitzustellen, das jeweils an die erste und die zweite Verstärkerstufe (AMP$_L$, AMP$_R$) zu liefern ist; wobei das linke Signal ein gewichteter Durchschnitt des Zwischensignals und des Signals ist, das an dem ersten Eingang (L) empfangen wird, und wobei das rechte Signal ein gewichteter Durchschnitt des Zwischensignals und des Signals ist, das an dem zweiten Eingang (R) empfangen wird.

**10.** Audiovorrichtung nach Anspruch 8, wobei der Stereo-/Monoschalter einen elektronischen oder einen mechanischen Schalter beinhaltet, der konfiguriert ist, um entweder das Zwischensignal sowohl an die erste als auch an die zweite Verstärkerstufe (AMP$_L$, AMP$_R$) weiterzuleiten, oder die Signale, die an dem ersten und dem zweiten Eingang (R, L) empfangen werden, jeweils zu der ersten und der zweiten Verstärkerstufe (AMP$_L$, AMP$_R$).

**11.** Audiovorrichtung nach einem der Ansprüche 1 bis 10, wobei die Signalanalysiereinheit ferner konfiguriert ist, um zu erfassen, ob ein stereophones Signal an dem ersten und dem zweiten Eingang vorhanden ist oder ein monophones Signal an dem ersten oder dem zweiten Eingang vorhanden ist und um dem Stereo-/Monoschalter ein jeweiliges Steuersignal bereitzustellen, das angibt, ob ein stereophones oder ein monophones Signal erfasst worden ist, und um, wenn ein monophones Signal erfasst worden ist, zu erfassen, an welchem von dem ersten und dem zweiten Eingang das monophone Signal erfasst worden ist.

**12.** Audiovorrichtung nach einem der Ansprüche 1 bis 11, wobei die Signalanalysiereinheit konfiguriert ist, um den kurzfristigen Signalpegel oder den kurzfristigen Leistungspegel von Signalen zu berechnen, die an dem ersten und dem zweiten Eingang empfangen werden, wodurch erste und zweite Signalpegel erhalten werden, wobei die Signalpegel angeben, ob ein stereophones Signal an den Eingängen vorhanden ist oder ein monophones Signal an einem der Eingänge vorhanden ist, und wenn ein monophones Signal vorhanden ist, die Signalpegel angeben, an welchen Eingang das monophone Signal geliefert wird.

**13.** Audiovorrichtung nach einem der Ansprüche 1 bis 12, wobei die Signalanalysiereinheit konfiguriert ist, um den kurzfristigen Signal- oder Leistungspegel von Signalen zu berechnen, die an dem ersten und dem zweiten Eingang empfangen werden, wodurch erste und zweite Signalpegel erhalten werden, und ferner konfiguriert ist, um das Verhältnis der Signalpegel zu berechnen.

## Revendications

**1.** Dispositif audio (figure 5) qui comporte :

une première et une seconde entrée (R, L) pour la réception, respectivement d'un composant gauche et d'un composant droit d'un signal audio stéréophonique ou pour la réception d'un signal audio monophonique au niveau d'une de la première ou seconde entrée ; un premier et un second étage d'amplificateur (AMP$_L$, AMP$_R$) ; une commutation stéréo/mono (SW1, SW2) qui est configurée pour diriger le composant gauche et le composant droit d'un signal audio stéréophonique reçu au niveau de la première et seconde entrée (L, R) au premier et au second étage d'amplificateur (AMP$_L$, AMP$_R$), respectivement, ou un signal monophonique reçu au niveau d'une des première et seconde entrées aux deux du premier et du second étage d'amplificateur (AMP$_L$, AMP$_R$) ; et une unité d'analyse de signal (figure 5, analyse de signal) couplée à la première et seconde entrée (R, L) et configurée pour détecter automatiquement si un signal monophonique est présent au niveau de la première entrée ou la seconde entrée et pour fournir un signal de commande respectif à la commutation stéréo/mono indiquant à laquelle de la première et seconde entrée (R, L) le signal monophonique a été détecté, **caractérisé en ce que** la commutation stéréo/mono est configurée pour fournir un signal mono au premier et second étage d'amplificateur (AMP$_L$, AMP$_R$), le signal mono étant une somme pondérée de signaux reçus au niveau de la première et seconde entrée (R, L), la somme pondérée étant calculée en utilisant des facteurs de pondération (a, b) appliqués aux signaux reçus au niveau des première et seconde entrée (R, L).

**2.** Dispositif audio selon la revendication 1, dans lequel le facteur de pondération pour le signal reçu au niveau de la première entrée est réglé à 1 et le facteur de pondération pour le signal reçu au niveau de la seconde entrée est réglé à 0, ou vice versa, en fonction de l'entrée à laquelle un signal monophonique est détecté par l'unité d'analyse de signal.

**3.** Dispositif audio selon la revendication 1 ou 2, comprenant en outre des commutations configurées pour diriger le signal de somme pondérée aux deux étages d'amplificateur (AMP$_L$, AMP$_R$) ou, en variante, pour diriger les signaux reçus au niveau de la première et seconde entrée à l'étage d'amplificateur respectif (AMP$_L$, AMP$_R$) .

**4.** Dispositif audio selon la revendication 1, 2 ou 3, dans lequel les facteurs de pondération sont réglés à 0,5 lorsqu'un signal stéréophonique est détecté par l'unité d'analyse de signal.

**5.** Dispositif audio selon l'une des revendications 1 à 4, dans lequel la commutation stéréo/mono est configurée pour fournir le signal b l(t)+(1-b) m(t) au premier étage d'amplificateur (AMP$_L$) et le signal b r(t)+(1-b) m(t) au second étage d'amplificateur (AMP$_R$),

dans lequel l(t) est le signal reçu au niveau de la première entrée, r(t) est le signal reçu au niveau de la seconde entrée, a et b sont des facteurs de pondération, et m(t) est une somme pondérée de l(t) et r(t) égalant a l(t)+(1-a) r(t), dans lequel l'unité d'analyse de signal est configurée pour régler le facteur de pondération b à 1 si un signal stéréophonique est détecté au niveau de la première et seconde entrée et à 0 si un signal monophonique est détecté à une de la première et seconde entrée (R, L) et dans lequel l'unité d'analyse de signal est configurée pour régler le facteur de pondération a à 1 si un signal monophonique est détecté au niveau de la première entrée (L) et à 0 si un signal monophonique est détecté au niveau de la seconde entrée (R).

**6.** Dispositif audio selon l'une des revendications précédentes, dans lequel l'unité d'analyse de signal est configurée pour

calculer le niveau de signal à court terme ou le niveau de puissance à court terme de signaux reçus au niveau des première et seconde entrées obtenant ainsi des premiers et seconds niveaux de signal, calculer un rapport ou une différence entre les niveaux calculés, et déterminer au moins un facteur de pondération à appliquer aux signaux reçus au niveau des première et seconde entrées selon une comparaison entre le rapport calculé ou la différence et au moins deux seuils, le résultat de la comparaison indiquant si un signal stéréophonique ou un signal monophonique est présent au niveau des première et seconde entrées et, si un signal monophonique est présent, laquelle de la première et seconde entrée reçoit le signal monophonique.

**7.** Dispositif audio selon la revendication 6, dans lequel l'unité d'analyse de signal est en outre configurée pour lisser le/les facteur(s) de pondération calculés en utilisant des filtres de lissage.

**8.** Dispositif audio selon la revendication 6, dans lequel deux facteurs de pondération sont utilisés pour calculer une moyenne pondérée des signaux reçus au niveau des première et seconde entrées fournissant ainsi un signal intermédiaire.

**9.** Dispositif audio selon la revendication 8, dans lequel deux autres facteurs de pondération sont utilisés pour fournir un signal gauche et un signal droit à fournir aux premier et second étage d'amplificateur (AMP$_L$, AMP$_R$) respectivement ;

le signal gauche étant une moyenne pondérée du signal intermédiaire et du signal reçu au niveau de la première entrée (L), et le signal droit étant une moyenne pondérée du signal intermédiaire et du signal reçu au niveau de la seconde entrée (R) .

**10.** Dispositif audio selon la revendication 8, dans lequel la commutation stéréo/mono a comporte une commutation électronique ou une commutation mécanique configurée pour transmettre le signal intermédiaire aux deux, le premier et le second étage d'amplificateur (AMP$_L$, AMP$_R$), ou les signaux reçus au niveau des première et seconde entrées (R, L) au premier et second étage d'amplificateur (AMP$_L$, AMP$_R$) respectivement.

**11.** Dispositif audio selon l'une des revendications 1 à 10, dans lequel l'unité d'analyse de signal est en outre configurée pour détecter si un signal stéréophonique est présent au niveau de la première et seconde entrée ou un signal monophonique est présent au niveau de la première ou second entrée et pour fournir un signal de commande respectif à la commutation stéréo/mono indiquant si un signal stéréophonique ou un signal monophonique a été détecté et, si un signal monophonique a été détecté, pour détecter à laquelle de la première et seconde entrée le signal monophonique a été détecté.

**12.** Dispositif audio selon l'une des revendications 1 à 11, dans lequel l'unité d'analyse de signal est configurée pour calculer le niveau de signal à court terme ou le niveau de puissance à court terme de signaux reçus au niveau des première et seconde entrées obtenant ainsi des premier et second niveaux de signal, les niveaux de signal indiquant si un signal stéréophonique est présent au niveau des entrées ou un signal monophonique est présent au niveau d'une des entrées et, si un signal monophonique est présent, les niveaux de signal indiquant l'entrée à laquelle le signal monophonique est fourni.

13. Dispositif audio selon l'une des revendications 1 à 12, dans lequel l'unité d'analyse de signal est configurée pour calculer le signal à court terme ou niveau de puissance de signaux reçus au niveau des première et seconde entrées, obtenant ainsi des premier et second niveaux de signal et est en outre configurée pour calculer le rapport des niveaux de signal.

**FIG. 1**   source coupled only to left channel

**FIG. 2**   source coupled to both channels via Y-cable

**FIG. 3**      source coupled only to both channels via mechanic switch

**FIG. 4**      universal stereo/mono switch

FIG. 5          semiautomatic stereo/mono switch

FIG. 6          automatic stereo/mono switch

(a)

(b)

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5515442 A
- US 3634626 A